# EUROPÄISCHE PATENTSCHRIFT

(11) **EP 1 206 365 B1**
(45) Veröffentlichungstag und Bekanntmachung des Hinweises auf die Patenterteilung: **04.06.2003**
(21) Anmeldenummer: 00958479.8
(22) Anmeldetag: 21.08.2000
(51) Int. Cl.: B60K 5/12

(54) **LAGERUNG FÜR EINE ANTRIEBSEINHEIT**
SUSPENSION FOR A DRIVE UNIT
PALIER POUR UNITE D'ENTRAINEMENT

(30) Priorität: 19.08.1999 DE 19939304
(43) Veröffentlichungstag der Anmeldung: 22.05.2002
(73) Patentinhaber: Trelleborg Automotive Technical Centre GmbH, 56203 Höhr-Grenzhausen (DE)
(72) Erfinder: GUGSCH, Mathias, D-56587 Strassenhaus (DE)
(74) Vertreter: Preissner, Nicolaus
(86) Internationale Anmeldenummer: EP0008139
(87) Internationale Veröffentlichungsnummer: WO01014159

(56) Entgegenhaltungen:
- DE-A- 3 340 152
- DE-A- 4 009 995

## Beschreibung

Die vorliegende Erfindung betrifft eine Lagerung für eine Antriebseinheit, insbesondere zur Verwendung in einem Kraftfahrzeug, die eine Torque-Roll-Achse aufweist, mit einem ersten Lager, das auf der Torque-Roll-Achse liegt, und zwei weiteren Lagern, die beabstandet zur Torque-Roll-Achse angeordnet sind.

Die Erfindung betrifft weiter eine zweite Lagerung für eine Antriebseinheit, insbesondere zur Verwendung in einem Kraftfahrzeug, die eine Torque-Roll-Achse aufweist, mit zwei auf der Torque-Roll-Achse angeordneten Lagern.

Gattungsgemässe Lagerungen sind aus der DE 40 09 995 A1 bekannt, die auf dieselbe Anmelderin zurückgeht. In dieser Druckschrift wird eine Drei-Punkt-Lagerung für eine Antriebseinheit beschrieben. Gemäß einer ersten Variante sind ein Lager auf der Torque-Roll-Achse und zwei Lager beabstandet zu dieser Achse angeordnet. Eine zweite Variante beschreibt zwei Lager auf der Torque-Roll-Achse und eine zusätzliche Stabilisierung über eine Drehmomentstütze. Die Lager auf der Torque-Roll-Achse weisen dabei eine geringe Drehsteifigkeit um diese Achse auf. Nachteilig bei diesen bekannten Lagerungen ist das Festlegen der Antriebseinheit an unterschiedlichen Stellen des Chassis. An jeder Lagerstelle werden unterschiedliche Kräfte und Schwingungen in das Chassis eingeleitet und von diesem in den Innenraum des Kraftfahrzeugs übertragen und in ein Innengeräusch umgewandelt. Das Übertragungsverhalten des Chassis ist hochgradig nichtlinear. Die an den einzelnen Lagerstellen eingeleiteten Kräfte und Schwingungen führen daher zu einem Innengeräusch, das sich ohne genaue Kenntnis des Verhaltens des Chassis nicht vorhersagen läßt. Eine Überlagerung der in das Chassis eingeleiteten Kräfte und Schwingungen mit dem Ziel einer gegenseitigen Tilgung läßt sich während der Entwicklung eines Kraftfahrzeugs schlecht vorausberechnen. Bei den bekannten Lagerungen lassen sich daher weder der Tilgungseffekt nutzen noch das Innengeräusch vorausberechnen.

Aufgabe der vorliegenden Erfindung ist es daher, eine Lagerung bereitzustellen, die die Gesamtbelastung des Chassis durch eine Tilgung der eingeleiteten Kräfte und Schwingungen verringert und eine bessere Berechnung des Innengeräusches ermöglicht.

Das Grundkonzept der Erfindung sieht vor die Antriebseinheit im wesentlichen nur an zwei Stellen des Chassis zu lagern. Bei der ersten oben beschriebenen Lagerung wird diese Aufgabe dadurch gelöst, daß die beiden weiteren Lager an demselben Bauteil angebracht sind, wobei das eine Lager oberhalb der Torque-Roll-Achse und das andere Lager unterhalb der Torque-Roll-Achse angeordnet ist. Bei der zweiten oben beschriebenen Lagerung ist zur Lösung vorgesehen, daß eines der beiden Lager als Traglager zur Aufnahme des Gewichts der Antriebseinheit und als Stützlager zum Abstützen von Drehmomenten um die Torque-Roll-Achse sowie um eine Lastrichtung ausgebildet ist. Eine zusätzliche Drehmomentstütze oder weitere Lager sind nicht vorgesehen.

Bei der ersten Lagerung werden die beiden weiteren Lager durch das Anbringen an demselben Bauteil zusammengefaßt. Ein Festlegen der Antriebseinheit an völlig verschiedenen Stellen des Chassis liegt nicht vor. Vielmehr können sich die von den beiden weiteren Lagern eingeleiteten Kräfte und Schwingungen in dem Bauteil überlagern und über einen großen Last- und Drehzahlbereich gegenseitig tilgen. Die Gesamtbelastung des Chassis wird verringert, und die Berechnung des Innengeräuschs wird erleichtert.

Durch das Anordnen eines Lagers oberhalb der Torque-Roll-Achse und des anderen Lagers unterhalb der Torque-Roll-Achse ergibt sich eine Isolation von Antriebseinheiten mit Motoren, deren Massenkräfte in der Hochrichtung translatorisch nicht ausgeglichen sind. Dies ist insbesondere bei Vier-Zylinder-Motoren der Fall. Die erfindungsgemäße Lageranordnung ermöglicht eine Momentabstützung, die im wesentlichen senkrecht zu den translatorischen Massenkräften steht.

Beim Anbringen der beiden weiteren Lager an einem Längsträger bleibt dessen Steifigkeit wegen der erfindungsgemäßen Anordnung der Lager übereinander im wesentlichen unverändert. Das Crash-Verhalten des Kraftfahrzeugs wird daher durch die erfindungsgemäße Lagerung nicht beeinträchtigt.

Bei der zweiten erfindungsgemäßen Lagerung werden die Kräfte und Schwingungen an nur zwei Stellen in das Chassis eingeleitet. Diese Schwingungen und Kräfte durch Wechseldrehmomente überlagern sich daher bereits vor dem Einleiten in das Chassis. Hierdurch wird die größtmögliche Tilgung erreicht, so daß nur Drehmomente und keine freien Kräfte in das Chassis eingeleitet werden. Weiter läßt sich das Innengeräusch besser berechnen.

Vorteilhafte Ausgestaltungen und Weiterbildungen der Erfindung gehen aus den abhängigen Ansprüchen hervor.

in vorteilhafter Ausgestaltung weisen die beiden weiteren Lager eine derartige Steifigkeit und Anordnung zur Torque-Roll-Achse auf, daß sie dasselbe Rückstellmoment um die Torque-Roll-Achse auf die Antriebseinheit ausüben. Das elastische Zentrum der beiden weiteren Lager liegt dann auf der Torque-Roll-Achse. Die beiden weiteren Lager können symmetrisch zur Torque-Roll-Achse angeordnet sein, also mit gleichen Abständen. In diesem Fall werden vorteilhaft Lager gleicher Steifigkeit bezüglich des Rückstellmoments um die Torque-Roll-Achse ausgewählt. Alternativ können die beiden weiteren Lager unterschiedliche Abstände zur Torque-Roll-Achse aufweisen. Hierdurch kann die Lagerung an den zur Verfügung stehenden Einbauraum angepaßt werden. Bei dieser Alternative werden vorteilhaft Lager mit unterschiedlicher Steifigkeit bezüglich des Rückstellmoments um die Torque-Roll-Achse verwendet, so daß die unterschiedlichen Abstände ausgeglichen werden.

Vorteilhaft schneidet eine Gerade durch die beiden weiteren Lager die Torque-Roll-Achse. Das Wirkzentrum dieser beiden Lager liegt dann ebenfalls auf der Torque-Roll-Achse. Ein Abstand zwischen der Geraden und der Torque-Roll-Achse ist nicht vorgesehen, so daß der erforderliche Bauraum verringert wird.

In vorteilhafter Weiterbildung verläuft die Gerade senkrecht zur Torque-Roll-Achse. Diese Anordnung ermöglicht eine optimale Tilgung der von den beiden Lagern aufgenommenen Kräfte und Schwingungen, so daß die Belastungen des Chassis weiter verringert werden.

Vorteilhaft ist eines der beiden weiteren Lager, insbesondere das obere Lager, als Traglager zur Aufnahme des Gewichts der Antriebseinheit ausgebildet. Das andere der beiden Lager, insbesondere das untere Lager, wird von dem Gewicht der Antriebseinheit entlastet.

Nach einer vorteilhaften Ausgestaltung sind die beiden weiteren Lager als Stützlager zum Abstützen von Drehmomenten um die Torque-Roll-Achse sowie um eine Lastrichtung ausgebildet. Insbesondere bei Kraftfahrzeugen mit quer eingebauter Antriebseinheit und Vorderradantrieb oder mit längs eingebauter Antriebseinheit und Hinterradantrieb verlaufen die Torque-Roll-Achse und die Lastrichtung des statischen Moments nahezu parallel. Durch die erfindungsgemäße Ausbildung der beiden weiteren Lager mit einem Traglager und zwei Stützlagern können die im Leerlauf der Antriebseinheit und die unter Last entstehenden Kräfte und Schwingungen bei weitgehender gegenseitiger Tilgung gut aufgenommen werden.

Gemäß einer vorteilhaften Weiterbildung weisen die beiden weiteren Lager eine progressive Drehsteifigkeit um die Torque-Roll-Achse sowie die Lastrichtung auf. Im Leerlauf erzeugt die Antriebseinheit Schwingungen mit kleinem Drehmoment um die Torque-Roll-Achse, die zu einer geringen Amplitude führen. Die beiden weiteren Lager sind bei dieser geringen Amplitude relativ weich, so daß die Schwingungen abgedämpft und nicht in das Chassis eingeleitet werden. Während der Fahrt wirken vergleichsweise große Lastmomente, die zu größeren Amplituden führen und über die beiden Lager gegenüber dem Chassis abgestützt werden müssen. Aufgrund der progressiven Drehsteifigkeit können diese großen Lastmomente bei nur geringen Bewegungen der Antriebseinheit aufgenommen werden.

In vorteilhafter Ausgestaltung ist das erste, auf der Torque-Roll-Achse liegende Lager als Traglager zur Aufnahme des Gewichts der Antriebseinheit ausgebildet. Das Gewicht der Antriebseinheit wird somit von diesem ersten Lager und einem der beiden weiteren Lager aufgenommen. Eine dritte Lagerstelle zur Aufnahme des Gewichts ist nicht erforderlich, so daß der konstruktive Aufwand verringert wird.

Nach einer vorteilhaften Weiterbildung weist das erste Lager eine geringe Drehsteifigkeit um die Torque-Roll-Achse sowie eine Lastrichtung auf. Dieses Lager wird durch die beiden weiteren Lager praktisch vollständig von einer Drehmomentabstützung im Fahrbetrieb entlastet. Ein Einleiten von auf diese Drehmomentabstützung zurückgehenden Kräften durch das erste Lager in das Chassis wird verhindert. Vielmehr werden die im Fahrbetrieb auftretenden Drehmomente und Kräfte durch die beiden weiteren Lager aufgenommen, die an demselben Bauteil angebracht sind. Hierdurch ist eine Tilgung der von den beiden weiteren Lagern aufgenommenen Kräfte und Schwingungen möglich, so daß die Belastung des Chassis verringert wird. in beiden Ausführungsvarianten der Erfindung umfaßt die Antriebseinheit einen Motor und ein Getriebe. Bei der ersten Variante der Erfindung ist in erster Ausgestaltung das erste, auf der Torque-Roll-Achse liegende Lager vorteilhaft motorseitig angeordnet. Die beiden weiteren Lager sind getriebeseitig angeordnet. Die Torque-Roll-Achse verläuft auf der Getriebeseite meistens durch das Getriebe, so daß ein Anordnen eines Lagers auf dieser Achse nur durch eine entsprechende Vergrößerung des Bauraums möglich ist. Es werden daher die beiden weiteren Lager verwendet, die erfindungsgemäß an demselben Bauteil angebracht sind.

Gemäß einer zweiten vorteilhaften Ausgestaltung dieser ersten Variante ist das erste, auf der Torque-Roll-Achse liegende Lager getriebeseitig angeordnet. Die beiden weiteren Lager sind motorseitig angeordnet. In vielen Fällen verläuft die Torque-Roll-Achse in Richtung zum Getriebe nach unten. Motorseitig liegt daher nur ein geringer Abstand zwischen der Torque-Roll-Achse und dem Chassis vor. Die beiden symmetrisch zur Torque-Roll-Achse angeordneten Lager können daher mit nur geringem konstruktiven Aufwand praktisch symmetrisch zum Chassis angeordnet werden.

Alternativ können gemäß der zweiten Variante der Erfindung zwei Lager auf der Torque-Roll-Achse angeordnet werden. Eines dieser Lager ist als Traglager und Stützlager ausgebildet, vorteilhaft getriebeseitig angeordnet, und umfaßt eine spiralförmig gewundene Blattfeder. Diese Blattfeder nimmt das Gewicht der Antriebseinheit auf und stellt die gewünschte Drehmomentabstützung bereit. Die Blattfeder ermöglicht weiter die gewünschte progressive Drehsteifigkeit.

Vorteilhaft ist das andere der beiden Lager als Traglager zur Aufnahme des Gewichts der Antriebseinheit ausgebildet. Eine Drehmomentabstützung durch dieses andere Lager ist nicht vorgesehen. Ein Großteil der im Leerlauf und im Fahrbetrieb auftretenden Momente, Kräfte und Schwingungen wird somit von dem als Traglager und als Stützlager ausgebildeten Lager aufgenommen. Diese Kräfte, Momente und Schwingungen tilgen sich daher soweit wie möglich gegenseitig, so daß die Gesamtbelastung des Chassis wesentlich verringert wird.

Nachstehend wird die Erfindung anhand von Ausführungsbeispielen näher beschrieben, die in schematischer Weise in der Zeichnung dargestellt sind. Dabei zeigt:
- Figur 1: eine schematische perspektivische Darstellung der ersten Lagerungsvariante in erster Ausgestaltung einer Lagerung;
- Figur 2: eine Prinzipskizze der Lagerung gemäß Figur 1;
- Figur 3: eine Darstellung der motorseitigen Lagerung des Antriebsaggregats;
- Figur 4: eine Darstellung der getriebeseitigen Lagerung des Antriebsaggregats;
- Figur 5: eine Prinzipskizze einer zweiten Ausgestaltung der ersten Lagerungsvariante ähnlich Figur 2;
- Figur 6: eine Ansicht in Pfeilrichtung VI in Figur 2 in erster Ausgestaltung;
- Figur 7: eine Ansicht ähnlich Figur 5 in zweiter Ausgestaltung;
- Figur 8: eine Prinzipskizze einer dritten Ausgestaltung der ersten Lagerungsvariante ähnlich Figur 2;
- Figur 9: eine Ansicht in Pfeilrichtung IX in Figur 8;
- Figur 10: eine schematische Darstellung der zweiten Lagerungsvariante der Erfindung;
- Figur 11: einen Schnitt durch das getriebeseitige Lager in Figur 10.

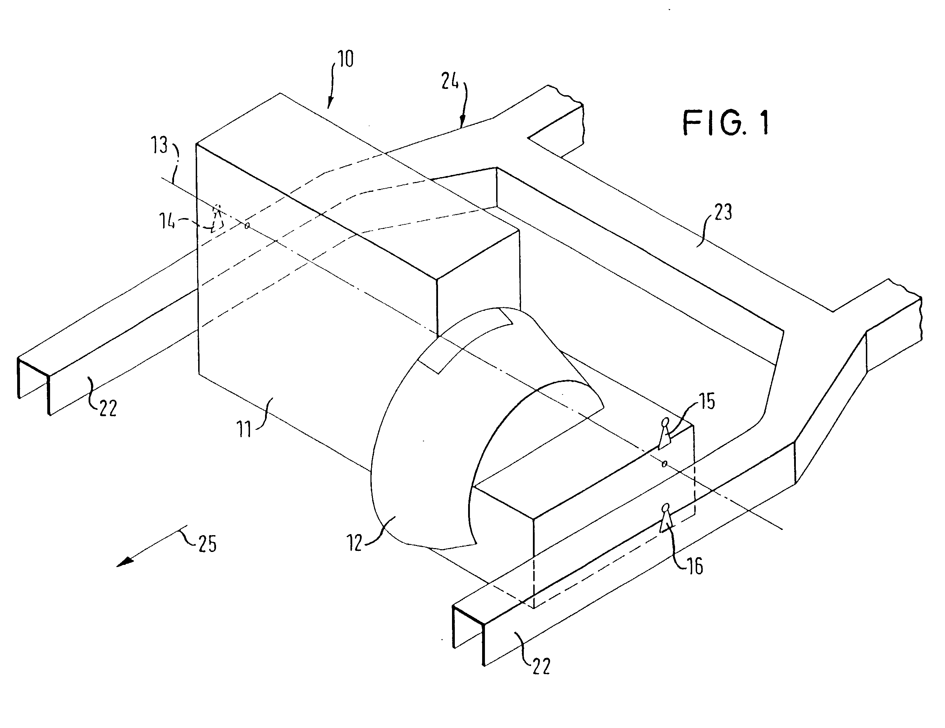

Figur 1 zeigt eine perspektivische Darstellung einer ersten Ausgestaltung einer erfindungsgemäßen Lagerung. Es ist eine Antriebseinheit 10 vorgesehen, die einen Motor 11 und ein Getriebe 12 umfaßt. Die Torque-Roll-Achse 13 der Antriebseinheit 10 verläuft im wesentlichen in Längsrichtung des Motors 11. Zur Lagerung der Antriebseinheit 10 dienen drei Lager 14, 15, 16. Das erste Lager 14 ist motorseitig angeordnet und liegt auf der Torque-Roll-Achse 13. Die beiden weiteren Lager 15, 16 sind oberhalb und unterhalb der Torque-Roll-Achse 13 angeordnet. Mittels der Lager 14, 15, 16 wird die Antriebseinheit 10 an Längsträgern 22 eines Fahrzeugchassis 24 gehalten. Die beiden Längsträger 22 sind über einen Querträger 23 verbunden. In der dargestellten Ausführungsform ist die Antriebseinheit 10 quer zur Fahrtrichtung 25 eingebaut.

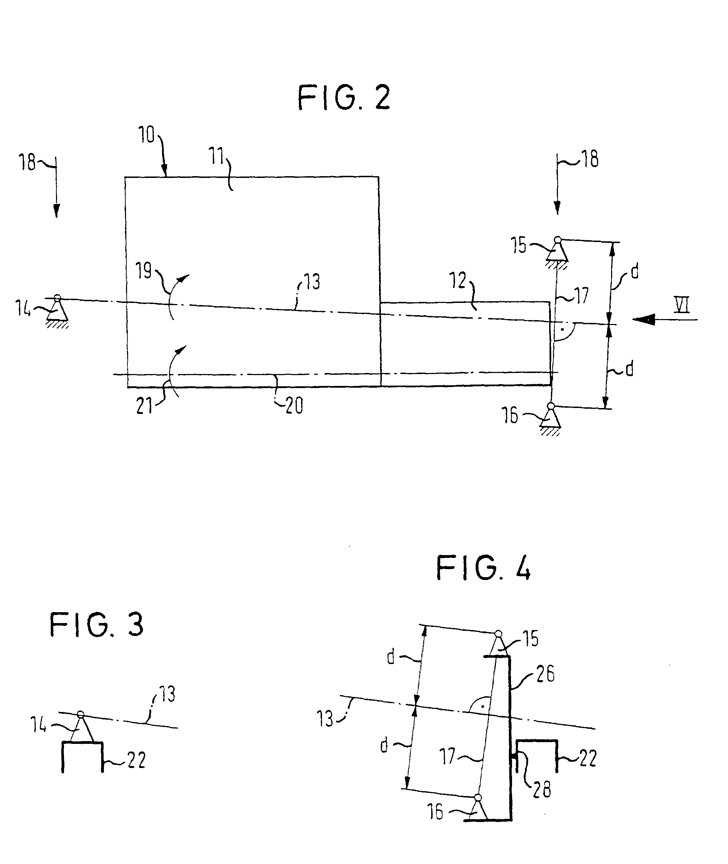

Figur 2 zeigt eine Prinzipskizze der Lagerung gemäß Figur 1, wobei die motorseitige Lagerung des Antriebsaggregats 10 in Figur 3 und die getriebeseitige Lagerung in Figur 4 näher dargestellt ist. Das erste Lager 14 liegt auf der Torque-Roll-Achse 13 und stützt sich an dem ersten Längsträger 22 ab. Die beiden weiteren Lager 15, 16 sind symmetrisch zur Torque-Roll-Achse 13 an einem Träger 26 angebracht. Der Träger 26 ist über eine Verbindungsstelle 28 an dem weiteren Längsträger 22 befestigt.

Die beiden Lager 15, 16 sind oberhalb beziehungsweise unterhalb der Torque-Roll-Achse 1 3 mit einem Abstand d angeordnet.

Eine Verbindungsgerade 17 durch die beiden Lager 15, 16 schneidet die Torque-Roll-Achse 13 und verläuft senkrecht zu ihr. Hierdurch wird der erforderliche Bauraum verringert. Weiter können sich die von den beiden Lagern 15, 16 aufgenommenen Kräfte und Schwingungen in dem Träger 26 gegenseitig tilgen, so daß die Belastungen des Längsträgers 22 verringert werden.

Das Lager 14 sowie das obere Lager 15 sind als Traglager zur Aufnahme des in Pfeilrichtung 18 wirkenden Gewichts der Antriebseinheit 10 ausgebildet. Das untere Lager 16 wird hierdurch von dem Gewicht entlastet.

Bei der dargestellten Ausführungsform mit quer eingebauter Antriebseinheit und Vorderradantrieb wirken während der Fahrt statische Drehmomente in Pfeilrichtung 21 um eine Lastrichtung 20. Die Lastrichtung 20 verläuft nahezu parallel zur Torque-Roll-Achse 13, um die im Leerlauf des Motors 11 Drehmomente in Pfeilrichtung 19 wirken. Erfindungsgemäß sind die beiden Lager 15, 16 als Stützlager zum Abstützen von Drehmomenten um die Torque-Roll-Achse 13 sowie die Lastrichtung 20 ausgebildet. Beide Lager 15, 16 weisen eine progressive Drehsteifigkeit auf.

Im Leerlauf des Motors 11 schwingt die Antriebseinheit 10 mit kleinem Drehmoment um die Torque-Roll-Achse 13. Dieses kleine Drehmoment führt zu geringen Amplituden. Die beiden Lager 15, 16 weisen bei diesen geringen Amplituden eine niedrige Drehsteifigkeit um die Torque-Roll-Achse 13 auf. Im Leerlauf des Motors 11 entstehende Schwingung werden daher abgedämpft und nicht in das Chassis 24 eingeleitet. Hierdurch ergibt sich eine gute Schwingungsisolation und ein hoher Komfort im Leerlauf.

Während der Fahrt wirken vergleichsweise große Momente um die Lastrichtung 20. Diese großen Momente führen zu größeren Amplituden als im Leerlauf. Die Drehsteifigkeit der beiden Lager 15, 16 steigt daher an, so daß auch bei großen Momenten nur geringe Bewegungen der Antriebseinheit 10 vorliegen.

Das Lager 14 dient lediglich zur Aufnahme des Gewichts der Antriebseinheit 10. Eine Drehmomentabstützung ist nicht vorgesehen. Sämtliche Drehmomente werden daher über die Lager 15, 16 in den Träger 26 eingeleitet. in diesen Träger 26 tilgen sich die von den Lagern 15, 16 eingeleiteten Kräfte und Schwingungen soweit wie möglich gegenseitigen. Nur die Resultierende wird schließlich über die Verbindungsstelle 28 in den Längsträger 22 des Chassis 24 eingeleitet. Hierdurch wird die Gesamtbelastung des Chassis 24 verringert.

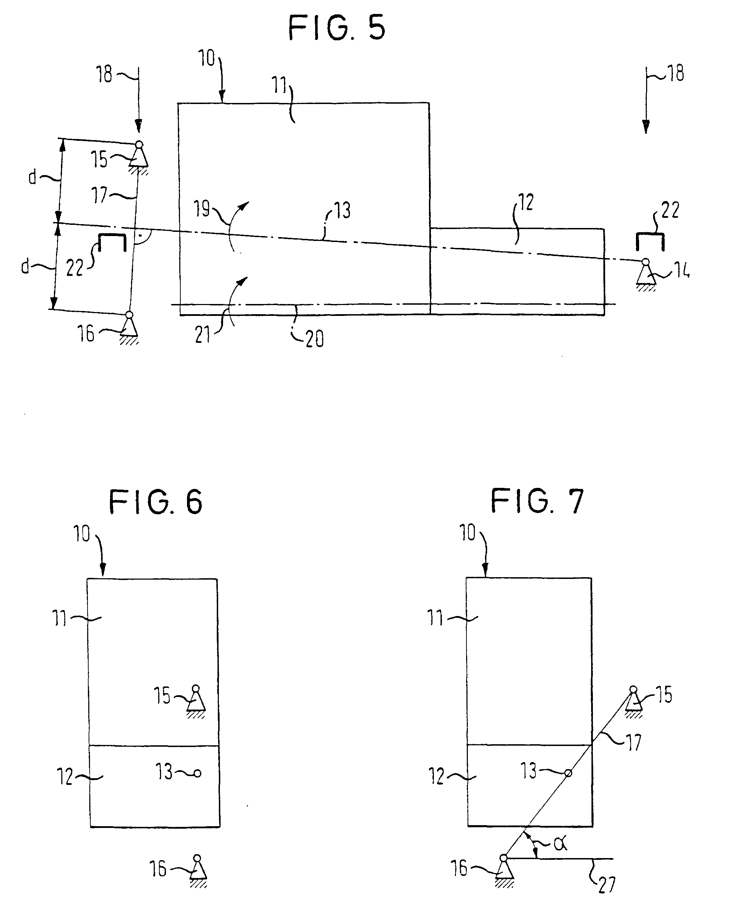

Figur 5 zeigt eine Prinzipskizze einer zweiten Ausgestaltung der ersten Lagerungsvariante ähnlich Figur 2. Gleiche oder funktionsähnliche Bauteile werden mit denselben Bezugszeichen wie in den Figuren 1 bis 4 versehen. Für eine Beschreibung dieser Bauteile wird auf obenstehenden Ausführungen verwiesen.

Bei der Ausgestaltung gemäß Figur 5 ist das erste Lager 14 getriebeseitig angeordnet. Die beiden weiteren Lager 15, 16 sind symmetrisch zur Torque-Roll-Achse 13 motorseitig angeordnet. Das Anbringen der Lager 14, 15, 16 an den Längsträgern 22 erfolgt mittels geeigneter, nicht näher dargestellter Verbindungselemente. Die Torque-Roll-Achse 13 tritt motorseitig näherungsweise auf halber Höhe des Motors 11 aus diesem aus. Die beiden Lager 15, 16 sind daher nicht nur symmetrisch zur Torque-Roll-Achse 13, sondern im wesentlichen auch symmetrisch zu dem Längsträger 22 angeordnet. Sie können daher mit geringem Aufwand an diesem Längsträger 22 befestigt werden. Das erste Lager 14 weist nur einen geringen Abstand zu dem Längsträger 22 auf. Zur Befestigung kann daher ein leichtgewichtiges Bauteil mit nur geringen Abmessungen verwendet werden.

Das untere Lager 16 liegt praktisch auf derselben Höhe wie die Unterkante der Antriebseinheit 10. Die insgesamt erforderliche Bauhöhe wird daher gegenüber der in Figur 2 dargestellten Ausführungsform wesentlich verringert.

Figur 6 zeigt eine Seitenansicht der getriebeseitigen Lagerung des Antriebsaggregats 10 gemäß Figur 2 oder der motorseitigen Lagerung gemäß Figur 5. Die beiden Lager 15, 16 sind direkt oberhalb bzw. unterhalb der Torque-Roll-Achse 13 angeordnet. Bei dieser Lageranordnung wird eine optimale Isolation von nicht ausgeglichenen translatorischen Massenkräften des Motors 11 in Hochrichtung erreicht. Derartige nicht ausgeglichene Massenkräfte treten insbesondere bei Motoren mit vier oder weniger Zylindern auf.

Figur 7 zeigt eine Seitenansicht ähnlich Figur 6 in weiterer Ausgestaltung. Die beiden Lager 15, 16 sind nicht direkt oberhalb beziehungsweise unterhalb der Torque-Roll-Achse 1 3 angeordnet, sondern seitlich versetzt. Die Gerade 17 durch die beiden Lager 15, 16 weist entsprechend einen Neigungswinkel α gegenüber der Waagrechten 27 auf.

In Abhängigkeit von den jeweils vorliegenden Verhältnissen sowie dem zur Verfügung stehenden Bauraum wird eine Anordnung der Lager 15, 16 gemäß Figur 6 oder Figur 7 gewählt.

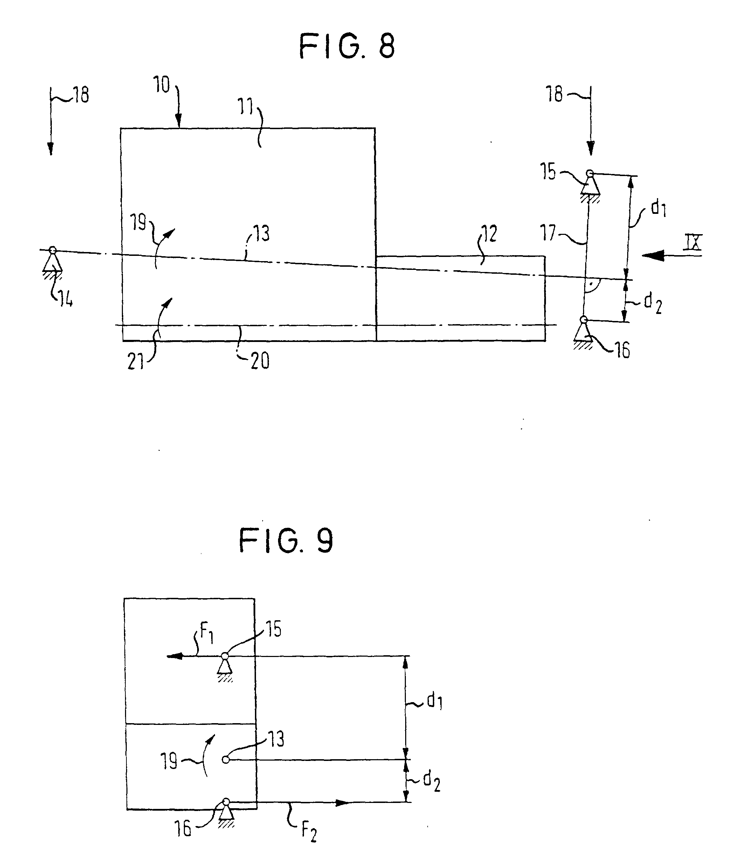

In den Figuren 8 und 9 ist schematisch eine dritte Ausgestaltung der ersten Lagerungsvariante der Erfindung. Auch hier werden gleiche oder funktionsidentische Bauteile mit denselben Bezugszeichen wie in den vorherigen Figuren versehen. Die beiden weiteren Lager 15, 16 weisen unterschiedliche Abstände d₁, d₂ zur Torque-Roll-Achse 13 auf. In Figur 8 ist der Abstand d₁ etwa 2,5 mal so groß wie der Abstand d₂. Hierdurch wird der unterhalb der Torque-Roll-Achse 13 erforderliche Bauraum wesentlich verringert, wie sich aus einem Vergleich mit Figur 2 ergibt.

Zum Ausgleichen der unterschiedlichen Abstände d₁, d₂ weisen die Lager 15, 16 unterschiedliche Steifigkeiten auf. Bei einem Moment um die Torque-Roll-Achse 13 in Pfeilrichtung 19 werden daher unterschiedlich große Gegenkräfte F₁, F₂ erzeugt. Es ist dargestellt, daß die Gegenkraft F₂ etwa 2,5 mal so groß ist wie die Gegenkraft F₁. Das auf die Antriebseinheit 10 wirkende Rückstellmoment um die Torque-Roll-Achse 13 als Produkt von Abstand und Kraft ist daher für beide Lager 15, 16 gleich groß. Das elastische Zentrum der beiden Lager 15, 16 liegt wie bei den Ausgestaltungen gemäß den Figuren 1 bis 7 auf der Torque-Roll-Achse 13.

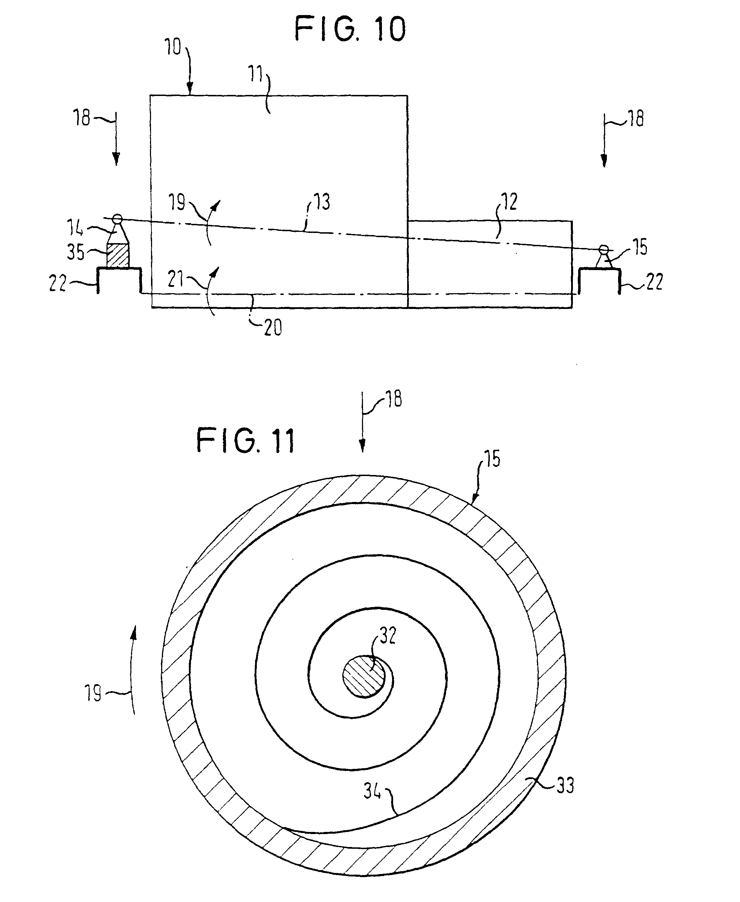

Figur 10 zeigt eine schematische Darstellung einer zweiten erfindungsgemäßen Lagerungsvariante. Gleiche oder funktionsähnliche Bauteile werden mit denselben Bezugszeichen wie in den Figuren 1 bis 7 versehen. Für eine Beschreibung dieser Bauteile wird auf obenstehende Ausführungen verwiesen.

Die Antriebseinheit 10 ist mit zwei auf der Torque-Roll-Achse 13 angeordneten Lagern 14, 15 auf den Längsträgern 22 des Chassis 24 gelagert. Wegen der Neigung der Torque-Roll-Achse ist das linke Lager 14 über ein Zwischenteil 35 erhöht. Beide Lager 14, 15 sind als Traglager zur Aufnahme des Gewichts der Antriebseinheit 10 ausgebildet. Das getriebeseitige Lager 15 ist weiter als Stützlager zum Abstützen von Drehmomenten um die Torque-Roll-Achse 13 sowie die Lastrichtung 20 ausgebildet. Das Lager 15 erfüllt somit eine Doppelfunktion als Traglager und Stützlager, während das Lager 14 lediglich als Traglager ausgebildet ist.

Die Antriebseinheit 10 weist lediglich die Lagerstellen der Lager 14, 15 als Verbindung mit dem Chassis 24 auf. Von der Antriebseinheit 10 erzeugte Kräfte und Schwingungen werden daher nur an diesen beiden Lagerstellen in das Chassis 24 eingeleitet. Eine zusätzliche Drehmomentstütze zum Bereitstellen einer dritten Lagerstelle ist nicht erforderlich.

Figur 11 zeigt einen Schnitt durch das getriebeseitige Lager 15 in Figur 10, das als Traglager und als Stützlager ausgebildet ist. Das Lager 15 weist ein Innenteil 32 und ein Gehäuse 33 auf, die über eine Blattfeder 34 verbunden sind. In der dargestellten Ausführungsform sind das Innenteil 32 und das Gehäuse 33 unter der statischen Belastung durch das Gewicht der Antriebseinheit 10 in Pfeilrichtung 18 konzentrisch zueinander angeordnet. Bei Bewegungen der Antriebseinheit 10 in Belastungsrichtung 18 wird die Blattfeder 34 verformt und wirkt der Bewegung entgegen. Bei Abstützen von Drehmomenten werden das Innenteil 32 und das Gehäuse 33 gegeneinander verdreht. Diese Verdrehung führt zu einer Verformung der Blattfeder 34 und damit zu einem Abstützen der aufgenommenen Drehmomente. In Abhängigkeit von den Randbedingungen wird die Blattfeder 34 wie in Figur 8 dargestellt im Uhrzeigersinn oder in Gegenrichtung gewickelt. Durch diese Formgebung der Blattfeder 34 wird gleichzeitig eine progressive Drehsteifigkeit des Lagers 15 um die Torque-Roll-Achse 13 sowie die Lastrichtung 20 erreicht.

Beiden erfindungsgemäßen Lagerungen ist gemeinsam, daß die Antriebseinheit 10 im wesentlichen nur an zwei Stellen des Chassis 24 gelagert wird. In der ersten Ausführungsform gemäß den Figuren 1 bis 6 erfolgt dies über das Lager 14 sowie die Verbindungsstelle 28 zwischen dem Träger 26 und dem Längsträger 22. In der zweiten Ausführungsform sind nur zwei Lager 14, 15 vorgesehen. Von der Antriebseinheit 10 erzeugte Schwingungen und Kräfte werden daher nicht in unterschiedliche Bauteile des Chassis 24 eingeleitet. Vielmehr überlagern sich diese Schwingungen und Kräfte und tilgen sich gegenseitig. Hierdurch wird die Gesamtbelastung des Chassis 24 verringert, und das Innengeräusch läßt sich besser berechnen.

## Patentansprüche

1. Lagerung für eine Antriebseinheit ( 10), insbesondere zur Verwendung in einem Kraftfahrzeug, die eine Torque-Roll-Achse (13) aufweist, mit einem ersten Lager (14), das auf der Torque-Roll-Achse (13) liegt, und zwei weiteren Lagern (15, 16), die symmetrisch zur Torque-Roll-Achse (13) angeordnet sind, **dadurch gekennzeichnet, daß** die beiden weiteren Lager (15, 16) an demselben Bauteil (22; 26) angebracht sind, wobei das eine Lager (15) oberhalb der Torque-Roll-Achse (13) und das andere Lager (16) unterhalb der Torque-Roll-Achse (13) angeordnet ist.

2. Lagerung nach Anspruch 1, **dadurch gekennzeichnet, daß** die beiden weiteren Lager (15, 16) eine derartige Steifigkeit und Anordnung zur Torque-Roll-Achse (13) aufweisen, daß sie dasselbe Rückstellmoment auf die Antriebseinheit (10) ausüben.

3. Lagerung nach Anspruch 1 oder 2, **dadurch gekennzeichnet, daß** die beiden weiteren Lager (15, 16) symmetrisch zur Torque-Roll-Achse (13) angeordnet sind.

4. Lagerung nach Anspruch 1, **dadurch gekennzeichnet, daß** die beiden weiteren Lager (15, 16) unterschiedliche Abstände (d₁, d₂) zur Torque-Roll-Achse (13) aufweisen.

5. Lagerung nach einem der Ansprüche 1 bis 4, **dadurch gekennzeichnet, daß** eine Gerade (17) durch die beiden weiteren Lager (15, 16) die Torque-Roll-Achse (13) schneidet.

6. Lagerung nach Anspruch 5, **dadurch gekennzeichnet, daß** die Gerade (17) senkrecht zur Torque-Roll-Achse (13) verläuft.

7. Lagerung nach einem der Ansprüche 1 bis 6, **dadurch gekennzeichnet, daß** eines der beiden weiteren Lager (15; 16), insbesondere das obere Lager (15), als Traglager zur Aufnahme des Gewichts der Antriebseinheit (10) ausgebildet ist.

8. Lagerung nach einem der Ansprüche 1 bis 7, **dadurch gekennzeichnet, daß** die beiden weiteren Lager (15, 16) als Stützlager zum Abstützen von Drehmomenten um die Torque-Roll-Achse (13) sowie um eine Lastrichtung (20) ausgebildet sind.

9. Lagerung nach Anspruch 8, **dadurch gekennzeichnet, daß** die beiden weiteren Lager (15, 16) eine progressive Drehsteifigkeit um die Torque-Roll-Achse (13) sowie die Lastrichtung (20) aufweisen.

10. Lagerung nach einem der Ansprüche 1 bis 9, **dadurch gekennzeichnet, daß** das erste, auf der Torque-Roll-Achse (13) liegende Lager (14) als Traglager zur Aufnahme des Gewichts der Antriebseinheit (10) ausgebildet ist.

11. Lagerung nach Anspruch 10, **dadurch gekennzeichnet, daß** das erste Lager (14) eine geringe Drehsteifigkeit um die Torque-Roll-Achse (13) sowie eine Lastrichtung (20) aufweist.

12. Lagerung nach einem der Ansprüche 1 bis 11, **dadurch gekennzeichnet, daß** die Antriebseinheit (10) einen Motor (11) und ein Getriebe (12) umfaßt und das erste, auf der Torque-Roll-Achse (13) liegende Lager (14) motorseitig angeordnet ist.

13. Lager nach einem der Ansprüche 1 bis 12, **dadurch gekennzeichnet, daß** die Antriebseinheit (10) einen Motor (11) und ein Getriebe (12) umfaßt und das erste, auf der Torque-Roll-Achse (13) liegende Lager (14) getriebeseitig angeordnet ist.

14. Lagerung für eine Antriebseinheit (10), insbesondere zur Verwendung in einem Kraftfahrzeug, die eine Torque-Roll-Achse (13) aufweist, mit zwei auf der Torque-Roll-Achse (13) angeordneten Lagern (14, 15), **dadurch gekennzeichnet, daß** eines der beiden Lager (15) als Traglager zur Aufnahme des Gewichts der Antriebseinheit (10) und als Stützlager zum Abstützen von Drehmomenten um die Torque-Roll-Achse ( 13) sowie um eine Lastrichtung (20) ausgebildet ist.

15. Lagerung nach Anspruch 14, **dadurch gekennzeichnet, daß** das Lager (15) eine spiralförmig gewundene Blattfeder (34) umfaßt.

16. Lagerung nach Anspruch 14 oder 15, **dadurch gekennzeichnet, daß** das andere der beiden Lager (14) als Traglager zur Aufnahme des Gewicht der Antriebseinheit (10) ausgebildet ist.

## Claims

1. A mounting system for a drive assembly (10), more particularly for use in a motor vehicle comprising a torque/roll axis (13) having a first mount (14) located on said torque/roll axis (13) and two further mounts (15, 16) arranged symmetrically to said torque/roll axis (13), **characterized in that** said two further mounts (15, 16) are provided on the same component (22; 26), said one mount (15) being arranged above said torque/roll axis (13) and said other mount (16) below said torque/roll axis (13).

2. The mounting system as set forth in claim 1, **characterized in that** said two further mounts (15, 16) are arranged so rigid relative to said torque/roll axis (13) that they exert the same restoring moment on said drive assembly (10).

3. The mounting system as set forth in claim 1 or 2, **characterized in that**, said two further mounts (15, 16) are arranged symmetrically to said torque/roll axis (13).

4. The mounting system as set forth in claim 1, **characterized in that** said two further mounts (15, 16) are distanced differingly (d1, d2) from said torque/roll axis (13).

5. The mounting system as set forth in any of the claims 1 to 4, **characterized in that** a straight tine (17) through said two further mounts (15, 16) intersects said torque/roll axis (13).

6. The mounting system as set forth in claim 5, **characterized in that** said straight line (17) stands perpendicular to said torque/roll axis (13).

7. The mounting system as set forth in any of the claims 1 to 6, **characterized in that** one of said two further mounts (15; 16), especially said upper mount, is configured as a support mount to take the weight of said drive assembly (10).

8. The mounting system as set forth in any of the claims 1 to 7, **characterized in that** said two further mounts (15, 16) are configured as support mounts to handle the torsional moments about said torque/roll axis (13) as well as about a load direction (20).

9. The mounting system as set forth in claim 8, **characterized in that** said two further mounts (15, 16) comprise a progressive torsional rigidity about said torque/roll axis (13) and said load direction (20).

10. The mounting system as set forth in any of the claims 1 to 9, **characterized in that** said first mount (14) located on said torque/roll axis (13) is configured as a support mount to take the weight of said drive assembly (10).

11. The mounting system as set forth in 10, **characterized in that** said first mount (14) comprises a low torsional rigidity about said torque/roll axis (13) and load direction (20).

12. The mounting system as set forth in any of the claims 1 to 11, **characterized in that** said drive assembly (10) comprises an engine (11) and a transmission (12) and said first mount (14) located on said torque/roll axis (13) is arranged at the engine end.

13. The mounting system as set forth in any of the claims 1 to 12, **characterized in that** said drive assembly (10) comprises an engine (11) and a transmission (12) and said first mount (14) located on said torque/roll axis (13) is arranged at the transmission end.

14. A mounting system for a drive assembly (10), more particularly for use in a motor vehicle, comprising a torque/roll axis (13) having two mounts (14, 15) arranged on said torque/roll axis (13), **characterized in that** one (15) of said two mounts is configured as a support mount to take the weight of said drive assembly (10) and as a support mount to handle the torsional moments about said torque/roll axis (13) and about a load direction (20).

15. The mounting system as set forth in claim 14, **characterized in that** said mount (15) comprises a spiral wound leaf spring (34).

16. The mounting system as set forth in claim 14 or 15, **characterized in that** the other (14) of said two mounts is configured as a support mount to take the weight of said drive assembly (10).

## Revendications

1. Suspension pour unité d'entraînement (10), en particulier destinée à être utilisée dans un véhicule qui présente un axe de torsion/roulis (13), comportant un premier palier (14) situé sur l'axe de torsion/roulis (13), et deux autres paliers (15, 16) qui sont agencés symétriquement à l'axe de torsion/roulis (13), **caractérisée en ce que** les deux autres paliers (15, 16) sont montés sur le même composant (22 ; 26), un des paliers (15) étant agencé au-dessus de l'axe de torsion/roulis (13) et l'autre palier (16) étant agencé au-dessous de l'axe de torsion/roulis (13).

2. Suspension selon la revendication 1, **caractérisée en ce que** les deux autres paliers (15, 16) présentent une rigidité et un agencement tels par rapport à l'axe de torsion/roulis (13) qu'ils exercent le même couple de rappel sur l'unité d'entraînement (10).

3. Suspension selon l'une ou l'autre des revendications 1 et 2, **caractérisée en ce que** les deux autres paliers (15, 16) sont agencés symétriquement par rapport à l'axe de torsion/roulis (13).

4. Suspension selon la revendication 1, **caractérisée en ce que** les deux autres paliers (15, 16) présentent des distances différentes (d₁, d₂) par rapport à l'axe de torsion/roulis (13).

5. Suspension selon l'une des revendications 1 à 4, **caractérisée en ce qu**'une droite (17) à travers les deux autres paliers (15, 16) recoupe l'axe de torsion/roulis (13).

6. Suspension selon la revendication 5, **caractérisée en ce que** la droite (17) s'étend perpendiculairement à l'axe de torsion/roulis (13).

7. Suspension selon l'une des revendications 1 à 6, **caractérisée en ce qu**'un des deux autres paliers (15, 16), en particulier le palier supérieur (15), est réalisé sous forme de palier d'appui pour encaisser le poids de l'unité d'entraînement (10).

8. Suspension selon l'une des revendications 1 à 7, **caractérisée en ce que** les deux autres paliers (15, 16), sont réalisés sous forme de paliers de soutien pour soutenir des couples de rotation autour de l'axe de torsion/roulis (13) ainsi qu'autour d'une direction de charge (20).

9. Suspension selon la revendication 8, **caractérisée en ce que** les deux autres paliers (15, 16) présentent une rigidité de rotation progressive autour de l'axe de torsion/roulis (13) ainsi qu'autour de la direction de charge (20).

10. Suspension selon l'une des revendications 1 à 9, **caractérisée en ce que** le premier palier (14) situé sur l'axe de torsion/roulis (13) est réalisé sous forme de palier d'appui pour encaisser le poids de l'unité d'entraînement (10).

11. Suspension selon la revendication 10, **caractérisée en ce que** le premier palier (14) présente une rigidité de rotation faible autour de l'axe de torsion/roulis (13) ainsi qu'autour d'une direction de charge (20).

12. Suspension selon l'une des revendications 1 à 11, **caractérisée en ce que** l'unité d'entraînement (10) comprend un moteur (11) et une transmission (12) et **en ce que** le premier palier (14) situé sur l'axe de torsion/roulis (13) est agencé côté moteur.

13. Suspension selon l'une des revendications 1 à 12, **caractérisée en ce que** l'unité d'entraînement (10) comprend un moteur (11) et une transmission (12) et **en ce que** le premier palier (14) situé sur l'axe de torsion/roulis (13) est agencé côté transmission.

14. Suspension pour une unité d'entraînement (10), en particulier pour être utilisée dans un véhicule automobile et qui présente un axe de torsion/roulis (13), comportant deux paliers (14, 15) agencés sur l'axe de torsion/roulis (13), **caractérisée en ce que** l'un des deux paliers (15) est réalisé sous forme de palier d'appui pour encaisser le poids de l'unité d'entraînement (10) et en tant que palier de soutien pour soutenir des couples de rotation autour de l'axe de torsion/roulis (13) ainsi qu'autour d'une direction de charge (20).

15. Suspension selon la revendication 14, **caractérisée en ce que** le palier (15) comprend un ressort à lame (34) spiralé.

16. Suspension selon l'une ou l'autre des revendications 14 et 15, **caractérisée en ce que** l'autre des deux paliers (14) est réalisé sous forme de palier d'appui pour encaisser le poids de l'unité d'entraînement (10).
